(19) Europäisches Patentamt
European Patent Office
Office européen des brevets

(11) **EP 3 651 347 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(51) Int Cl.:
**H02P 6/182** *(2016.01)*     **H02P 21/14** *(2016.01)*
**H02P 21/18** *(2016.01)*     **H02P 6/18** *(2016.01)*
**H02P 6/185** *(2016.01)*

(21) Anmeldenummer: **19220168.9**

(22) Anmeldetag: **31.12.2019**

(54) **VERFAHREN ZUM REGELN EINES PERMANENTMAGNETSYNCHRONMOTORS, STEUERVORRICHTUNG UND VAKUUMGERÄT**

METHOD FOR CONTROLLING A PERMANENT MAGNET SYNCHRONOUS MOTOR, CONTROL DEVICE AND VACUUM APPARATUS

PROCÉDÉ DE RÉGULATION D'UN MOTEUR SYNCHRONE À AIMANTS PERMANENTS, DISPOSITIF DE COMMANDE ET APPAREIL SOUS VIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.05.2020 Patentblatt 2020/20**

(73) Patentinhaber: **Pfeiffer Vacuum GmbH**
**35614 Asslar (DE)**

(72) Erfinder: **WANG, Jinou**
**35606 Solms-Oberbiel (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-A1- 3 582 387     DE-A1- 10 162 380
DE-A1-102007 028 384

**Beschreibung**

Die vorliegende Erfindung betrifft ein Verfahren zum Regeln eines Permanentmagnetsynchronmotors, eine Steuervorrichtung und ein Vakuumgerät.

Um einen Permanentmagnetsynchronmotor (PMSM) unter feldorientierter Steuerung (englisch: Field-Oriented-Control, FOC) betreiben zu können, ist eine Winkelinformation des Rotors (und damit Information über die Orientierung des magnetischen Flusses, die der Rotor bedingt) nötig. Diese Information wird üblicherweise über physikalische Sensoren, wie beispielsweise Encoder oder Hallsensoren bestimmt. Aufgrund der Natur von PMSMs, ist es möglich, einen "sensorlosen" Betrieb durch Verwendung eines Modells von Gegen-Elektromotrischer Kraft (Gegen-EMK, englisch: back electromotive force, back EMF) zu gewährleisten, der ohne physikalische Sensoren auskommt. Bei diesem Gegen-EMK-Ansatz wird eine durch die Bewegung des Rotors in einer momentan nicht aktivierten Spule des PMSM induzierte Spannung gemessen. Jedoch funktioniert der gewöhnliche Gegen-EMK-Ansatz nicht, wenn der Rotor sich langsam dreht, weil die induzierte Spannung in solchen Fällen zu klein ist, um korrekt gemessen werden zu können.

In der DE10162380 A1 wird ein Verfahren zum Starten eines bürstenlosen Gleichstrommotors mit einer mehrphasigen Statorwicklung angegeben, bei dem während des Rotorstillstands eine Mehrzahl von Stromimpulsen auf die Statorwicklung aufgeschaltet, in der Statorwicklung bei jedem Stromimpuls eine Stromanstiegszeit bis zum Erreichen einer Stromschwelle gemessen und aus den gemessenen Stromanstiegszeiten die Rotorposition abgeleitet wird.

Die DE102007028384 A1 betrifft ein Verfahren und eine Schaltungsanordnung zum Betreiben eines bürstenlosen Gleichstrommotors mit einem permanentmagnetisch erregten Rotor mit unterschiedlichen magnetischen Leitwerten in unterschiedlichen magnetischen Achsen, insbesondere in der Ausführung als Folgepolrotor. Zur sensorlosen Positionsbestimmung des Rotors und zur Überwachung der Ausführung der einzelnen Rotorschritte werden die Statorwicklungen innerhalb der Schrittpausen mit den Teststromimpulsen beaufschlagt, wobei die sich ändernde Induktivität des Magnetkreises die Anstiegszeiten der Stromimpulse bestimmt und die Positionskriterien liefert.

In der EP3582387 A1 wird bei einem Verfahren zum Abbremsen eines auf der Basis der Pulsweitenmodulation durch eine Raumzeigermodulation betreibbaren geberlosen Permanentmagnet-Synchronmotors der Permanentmagnet-Synchronmotor zum Abbremsen bei offenem Regelkreis nur durch einen rotierenden Spannungsvektor angesteuert. Dabei umfasst das Abbremsverfahren einen Synchronisationsschritt, in dem der Permanentmagnet-Synchronmotor mit einem rotierenden Synchronisations-Spannungsvektor konstanter Amplitude und konstanter Rotationsfrequenz angesteuert wird, und einen zeitlich darauffolgenden Abbremsschritt, in dem der Permanentmagnet-Synchronmotor mit einem rotierenden Abbrems-Spannungsvektor mit einer zeitlich bis auf den Wert Null abnehmenden Rotationsfrequenz angesteuert wird.

Es ist eine Aufgabe der Erfindung, Verfahren und Vorrichtungen bereitzustellen, die es ermöglichen, einen PMSM aus dem Stillstand zu starten und in einer "sensorlosen" Art und Weise durch den Bereich mit niedriger Drehzahl zu beschleunigen und auch wieder bis zum Stillstand abzubremsen.

Diese Aufgabe wird durch Verfahren zum Regeln eines Permanentmagnetsynchronmotors mit den Merkmalen des Anspruchs 1 gelöst.

Der Zielspannungsvektor kann kurz auch nur als Zielvektor bezeichnet werden. Der erste Zeitraum kann auch als Hauptansteuergrad oder Ansteuergrad des Hauptvektors bezeichnet werden. Der erste Spannungsvektor kann auch als Hauptvektor oder Hauptspannungsvektor bezeichnet werden. Der zweite Zeitraums kann auch als Hilfsansteuergrad oder Ansteuergrad des Hilfsvektors bezeichnet werden. Der zweite Spannungsvektor kann auch als Hilfsvektor oder Hilfsspannungsvektor bezeichnet werden.

Mit anderen Worten werden durch den Einsatz eines Modulationsverfahrens (also des Ermittelns eines ersten Zeitraums zum Ansteuern der Spulen mit einem ersten Spannungsvektor und eines zweiten Zeitraums zum Ansteuern der Spulen mit einem zweiten Spannungsvektor, so, dass eine aus der Ansteuerung der Spulen während des ersten Zeitraums und des zweiten Zeitraums resultierende Ansteuerung der Spulen äquivalent ist zu einer Ansteuerung der Spulen mit dem Zielspannungsvektor und dem Zielansteuergrad) die Ansteuerung des Motors (die eigentlich über den Zielspannungsvektor und den Zielansteuergrad erfolgen soll) und die Erfassung der Rotorlager gleichzeitig durchgeführt, was eine hohe Flexibilität bei der Parametrierung für die Inbetriebnahme bietet. Ein weiterer Vorteil besteht in der Implementierung eines automatisierten Vorgangs, was die Parametrierung deutlich vereinfacht und eine motorabhängige individuelle automatische Parameteranpassung ermöglicht.

Das Verfahren kann insbesondere bei Vakuumpumpen eingesetzt werden, bei denen die durch ihren schweren Rotor bedingte Schweranlaufeigenschaft ein Anlaufen des Motors schwierig gestaltet. Gleichzeitig kann erfindungsgemäß ab einer bestimmten Drehzahl auf ein gewöhnliches Regelungsverfahren umgeschaltet werden, was insbesondere durch die hohen Drehzahl von Vakuumpumpen sinnvoll sein kann.

Erfindungsgemäß basiert die Regelung auf Stromänderungen, die in den jeweils aktivierten Spulen auftreten, um das magnetische Feld oder den magnetischen Fluss zu messen. Eine Vorrichtung (also ein Sensor) zum Messen des magnetischen Felds oder des magnetischen Flusses kann als Fluxgate-Magnetometer oder Saturationskern-Magnetometer oder Förster-Sonde bezeichnet werden. Das Prinzip eines Fluxgate-Magnetometers ist es, eine Spule (beispielsweise mit weichmagnetischem Kern) abwechselnd in entgegengesetzte Richtungen in Sättigung zu bringen und dabei den Spulenstrom zu messen. Ohne externes magnetisches Feld ist der Spulenstrom symmetrisch. Bei Existenz eines externen magnetischen Feldes wird der Spulenstrom asymmetrisch, da die Spule in eine Richtung (gleichgerichtet mit der Richtung des externen Magnetfeldes) schneller in Sättigung kommt als in die andere Richtung (entgegen der Richtung des externen Magnetfeldes). Die Auswertung dieser Art von Asymmetrie erlaubt dann die Auswertung darüber, ob ein externes Magnetfeld vorliegt. Um das Fluxgate-Prinzip anzuwenden, kann also eine Spule (beispielsweise mit weichmagnetischem Kern) bereitgestellt werden, und ein abwechselndes Anlegen von Spannungen an die Spule bis in Sättigung entgegengesetzte Richtungen erfolgen, was die Beurteilung der Spulenströme erlaubt, um ein externes Magnetfeld auszuwerten.

Bei einem PMSM kann erfindungsgemäß basierend auf dem Fluxgate-Prinzip die Orientierung des magnetischen Flusses des Rotors ermittelt werden.

Erfindungsgemäß wird also ein auf dem Fluxgate-Prinzip basierendes Verfahren zum geregelten Beschleunigen (insbesondere Anlaufen oder Anfahrens) bzw. Bremsen (insbesondere Anhalten) einer PMSM ohne den Einsatz eines (Winkel-)Gebers bereitgestellt.

Das Verfahren kann insbesondere in einer Motorsteuerung für Turbo-Pumpen (oder Turbomolekularpumpen) mit Schweranlauf-Eigenschaft eingesetzt werden.

Gemäß einer Ausführungsform ist der erste Spannungsvektor gleichgerichtet zum Zielvektor, und der zweite Spannungsvektor ist gegengleichgerichtet zum Zielvektor.

Damit kann während des ersten Zeitraums durch die Spulen ein Magnetfeld erzeugt werden, das dem Magnetfeld, das während des zweiten Zeitraums von den Spulen erzeugt wird, entgegengesetzt ist. Die Lage des Rotors hat Einfluss darauf, wie schnell sich ein Magnetfeld während des ersten Zeitraums bzw. während des zweiten Zeitraums aufbauen kann. Eine Strommessung und insbesondere eine Messung einer Änderung des Stroms während des ersten Zeitraums und/oder während des zweiten Zeitraums kann dann zur Auswertung der Lage des Rotors verwendet werden.

Es kann vorgesehen sein, dass der erste Zeitraum a und der zweite Zeitraum b bei vorgegebenem Zielansteuergrad $\lambda$ zumindest im Wesentlichen folgende Bedingung erfüllen:

$$\lambda = \frac{a - b}{2}.$$

Anschaulich kann der Ansteuergrad a für den ersten Spannungsvektor größer sein als der Zielansteuergrad $\lambda$ für den Zielspannungsvektor (wobei der erste Spannungsvektor und der Zielspannungsvektor gleichgerichtet sein können) und dies kann durch den Ansteuergrad b für den zweiten Spannungsvektor (der dem Zielspannungsvektor entgegen gerichtet sein kann) ausgeglichen werden. Damit bleibt die (effektive) Gesamtansteuerung des Motors unverändert, obwohl der Zielspannungsvektor durch den ersten Spannungsvektor und den zweiten Spannungsvektor ersetzt wird, und gleichzeitig wird durch die entgegengesetzten Spannungsvektor (erster Spannungsvektor und zweiter Spannungsvektor) erreicht, dass das Magnetfeld, das durch die Spule erzeugt wird, schwankt, sodass Stromänderungen messbar sind, was gemäß dem Fluxgate-Prinzip eine Auswertung der Lage des Rotors ermöglicht.

Damit kann es vorgesehen sein, dass das Regeln des Permanentmagnetsynchronmotors ein Ermitteln einer Lage des Permanentmagnetrotors umfasst.

Gemäß einer Ausführungsform werden ferner Extremwerte (beispielsweise das Maximum und das Minimum) der Stromsteigung bei verschiedenen Ansteuerungen der Spulen ermittelt.

Die Extremwerte treten auf, wenn der Rotor entweder gleich oder entgegen dem Zielspannungsvektor (bzw. dem ersten oder zweiten Spannungsvektor) ausgerichtet ist. Diese Extremwerte können verwendet werden, um aktuelle Messwerte damit zu vergleichen, und so Informationen beispielsweise darüber zu gewinnen, ob zu einem nächsten Zielspannungsvektor weiter geschaltet werden soll.

Es kann vorgesehen sein, zu ermitteln, ob auf einen nächsten Zielspannungsvektor in einer gewünschten Bewegungsrichtung umgeschaltet werden soll, beispielsweise basierend auf mindestens einem der Extremwerte.

In einer Weiterbildung wird beim Anlaufen des Permanentmagnetsynchronmotors ermittelt, dass auf einen nächsten Zielspannungsvektor in einer gewünschten Bewegungsrichtung umgeschaltet werden soll, falls (oder sobald) die Stromsteigung einen vorgegebenen Maximalwert (der zwischen den ermittelten Extremwerten, beispielsweise zwischen Minimum und Maximum liegen kann) überschreitet.

Gemäß einer Ausführungsform wird beim Abbremsen des Permanentmagnetsynchronmotors ermittelt, dass auf einen nächsten Zielspannungsvektor in einer gewünschten Bewegungsrichtung umgeschaltet werden soll, falls (oder sobald) die Stromsteigung einen vorgegebenen Minimalwert (der zwischen den ermittelten Extremwerten, beispielsweise zwischen Minimum und Maximum liegen kann, und der gleich dem vorgegebenen Maximalwert sein kann) unterschreitet.

Es kann vorgesehen sein, dass die Stromsteigung basierend auf einer Stromänderung in den Spulen nur während des ersten Zeitraums oder nur während des zweiten Zeitraums ermittelt wird.

In einer Weiterbildung wird die Stromsteigung basierend auf einer Stromänderung in den Spulen während des ersten Zeitraums und während des zweiten Zeitraums ermittelt, insbesondere über eine Differenzbildung zwischen den Stromänderungen in den Spulen während des ersten Zeitraums und während des zweiten Zeitraums.

Durch die Differenzbildung können äußere Störeinflüsse, die sowohl Einfluss während des ersten Zeitraums als auch während des zweiten Zeitraums haben, verringert oder minimiert werden.

Gemäß einer Ausführungsform wird ferner eine Rotationsgeschwindigkeit des Permanentmagnetrotors basierend auf der Stromsteigung ermittelt. Beispielsweise kann basierend auf der Stromsteigung ermittelt werden, ob zu einem nächsten Zielspannungsvektor umgeschaltet werden soll, und durch das Messen der zeitlichen Abstände, zu denen das Umschalten erfolgt, kann die Rotationsgeschwindigkeit ermittelt werden.

Es kann vorgesehen sein, zu ermitteln, ob zu einem Regelungsverfahren, das nicht auf der ermittelten Stromsteigung basiert, umgeschaltet wird. Beispielsweise kann bei ausreichender Rotationsgeschwindigkeit, bei der andere Regelungsverfahren einsetzbar sind, ein anderes Regelungsverfahren zum Einsatz kommen, das weniger aufwendig ist oder einen geringeren Energieverbrauch hat.

Die Aufgabe der Erfindung wird auch durch eine Steuervorrichtung, insbesondere eines Vakuumgeräts, gemäß dem hierauf gerichteten unabhängigen Anspruch 13 gelöst, insbesondere durch eine Steuervorrichtung, die dazu eingerichtet ist, das oben beschriebene Verfahren auszuführen.

In einer Weiterbildung kann die Steuervorrichtung ferner eine übergeordnete Steuereinheit, die zum Bereitstellen von zum Erreichen einer gewünschten Bewegung des Permanentmagnetrotors nötigen Zielspannungsvektor und Zielansteuergrad eingerichtet ist, umfassen.

In einer Ausführungsform wird ein vektorpaarbasiertes Spannungsmodulationsverfahren zum Betreiben eines dreiphasigen Permanentmagnetsynchronmotors (PMSM) ohne die Verwendung eines physikalischen Mittels, das direkt den Winkel des Rotormagnetflusses ermittelt, bereitgestellt, wobei ein gegebener Zielspannungsvektor $\lambda \bullet \vec{u}_\xi$ vorgegeben ist, wobei $\vec{u}_\xi$ einer von sechs möglichen Spannungsvektoren, die durch einen B6-Brückenschaltkreis eines dreiphasigen Zweistufeninverters erzeugt werden, und wobei $\lambda$ den Ansteuergrad zwischen 0 und 100 % bezeichnet, wobei der Zielvektor approximiert wird durch einen äquivalenten Mittelwert von zwei benachbarten Zeitsegmenten, wobei die durchschnittliche Spannung während einem der beiden Segmente gleich $a \bullet \vec{u}_\alpha$ ist, wobei a einen unabhängigen Abtastgrad bezeichnet und $\vec{u}_\alpha$ der gleiche Spannungsvektor wie $\vec{u}_\xi$ ist, und wobei der Mittelwert des anderen Segments gleich $b \bullet \vec{u}_\beta$ ist, wobei der Hilfsvektor mit B den dritten Ansteuergrad repräsentiert und $b \bullet \vec{u}_\beta$ ein Vektor ist, der entgegen dem Vektor $\vec{u}_\xi$ des Zielvektors gerichtet ist.

Die beiden benachbarten Segmente können gleiche zeitliche Dauer haben und die Ansteuergrade $\lambda$, a und b erfüllen

Es kann ein Mittel zum Ermitteln einer Stromsteigung bereitgestellt werden, das eine Stromänderung des DC-Link-Stroms für die Dauer der aktiven Schaltung ermittelt, wenn mindestens eine Phase der 3 Phasen ein niedriges Potenzial des DC-Links hat und mindestens eine Phase der restlichen 2 Phasen ein hohes Potenzial des DC-Links hat.

Es kann einen Zielspannungsvektor $\lambda \bullet \vec{u}_\xi$ als Eingabe angenommen werden und eine Stromsteigung $\dot{I}_{mess}$ während des Anlegens (in anderen Worten: während des Aktivierens; in anderen Worten: während des Ansteuerns der Spulen mittels) des Hauptvektor $a \bullet \vec{u}_\alpha$ als Ausgabe ausgegeben werden.

Es kann einen Zielspannungsvektor $\lambda \bullet \vec{u}_\xi$ als Eingabe angenommen werden und eine Stromsteigung $\dot{I}_{mess}$ als Ausgabe ausgegeben werden, wobei $\dot{I}_{mess}$ die Differenz zwischen den Stromänderungen während des Anlegens des Hauptvektors $a \bullet \vec{u}_\alpha$ und der Stromänderung während des Anlegens des Hilfsvektors $b \bullet \vec{u}_\beta$ ist.

Eine Scanprozedur kann durchgeführt werden, die mindestens sechs zeitlich aufeinanderfolgende Abschnitte enthält, wobei in jedem Abschnitt ein anderer Zielspannungsvektor $\lambda \bullet \vec{u}_\xi$ angelegt wird, welcher die Bedingung erfüllt, dass unter den mindestens sechs Abschnitten jeder der sechs aktiven Spannungsvektoren mindestens einmal angewendet wird, und der Ansteuergrad $\lambda$ so gewählt ist, dass jeder der mindestens sechs Abschnitte des durchschnittlichen DC-Link-Stroms nicht weniger als der zum Betrieb notwendige DC-Link-Strom ist.

Es kann eine Speichervorrichtung bereitgestellt werden, die die während der Scanprozedur ermittelten Stromänderungen speichert, wobei jede der gespeicherten sechs Stromänderungen der Orientierung des Zielvektors $\lambda \bullet \vec{u}_\xi$, durch den die Stromänderung erreicht wird, zugeordnet ist, und die gespeicherten Stromänderungen die DC-Link-Stromänderung zu einem Zeitpunkt repräsentieren, zu dem der durchschnittliche DC-Link-Strom zum ersten Mal größer als ein vorgegebener Schwellwert ist, der nicht kleiner ist als der zum Betrieb notwendige DC-Link-Strom.

Es kann eine Anlaufprozedur zum Beschleunigen eines PMSM durchgeführt werden, der das oben beschriebene Spannungserzeugungsverfahren verwendet, wobei das Spannungserzeugungsverfahren 3 Phasen umfasst, wobei in der ersten Phase die anfängliche Orientierung des Rotormagnetflusses ermittelt wird, in der zweiten Phase ein anfänglicher Beschleunigungszielspannungsvektor ausgegeben wird, und in einer dritten Phase die Beschleunigung durch Umschalten und Anlegen des Zielspannungsvektors aufrechterhalten wird, bis eine Rotationsgeschwindigkeit des PMSM eine vorgegebene Geschwindigkeit $n_{min}$ erreicht.

Für die erste Phase kann die anfängliche Orientierung des Rotormagnetflusses ermittelt werden durch Bestimmung eines Maximalwert unter den gespeicherten Stromsteigungen aus dem Speichermedium, und Ermitteln der entsprechenden Orientierung, die dem gefundenen Maximalwert der Stromsteigungen entspricht, als die anfängliche Orientierung des Rotormagnetflusses.

Für die zweite Phase kann der anfängliche Beschleunigungszielspannungsvektor $\lambda \cdot \vec{u}_{\xi_0}$ so gewählt werden, dass der Ansteuergrad $\lambda$ sicherstellt, dass der durchschnittliche DC-Link-Strom im Stillstand nicht kleiner ist als der zum Betrieb nötige Strom, und die Orientierung $\xi_0$ des anfänglichen Beschleunigungszielspannungsvektor 120° der Richtung der ermittelten anfänglichen Magnetflussposition voraus ist.

In der dritten Phase kann der momentan angelegte Beschleunigungszielspannungsvektor unverändert bleiben, bis eine Umschaltbedingung erfüllt ist, wenn die momentane Stromsteigung $\dot{i}_{mess}$ größer als ein Schwellwert $\dot{i}_{mess}^{SW}$ ist, der zwischen dem Maximalwert $\dot{i}_{mess}^{Max}$ und dem Minimalwert $\dot{i}_{mess}^{Min}$ unter den gespeicherten Stromsteigungen ist, und ein neuer Beschleunigungszielspannungsvektor kann angelegt werden mit einer neuen Orientierung, die dem zuvor angelegten Beschleunigungszielspannungsvektor 60° voraus ist.

Es kann eine Abbremsprozedur für einen PMSM bereitgestellt werden von einer minimalen Rotationsgeschwindigkeit $n_{min}$ bis zum Stillstand unter Verwendung der oben beschriebenen Spannung Erzeugungsverfahren, wobei dieses drei zeitlich aufeinanderfolgende Phasen umfasst, wobei in der ersten Phase die anfängliche Orientierung des Rotormagnetflusses und die Rotationsrichtung ermittelt werden, in der zweiten Phase ein anfänglicher Bremszielspannungsvektor ausgegeben wird, und in einer dritten Phase das Bremsen durch Umschalten auf und Anwenden eines geeigneten Bremszielspannungsvektors bis zum Stillstand erreicht wird.

In der ersten Phase kann die anfängliche Orientierung des Rotormagnetflusses und die Rotationsgeschwindigkeit bekannt sein durch ein anderes Regelungsverfahren, beispielsweise ein anderes sensorloses Regelungsverfahren, wenn die Rotationsgeschwindigkeit zum ersten Mal unter den Grenzwert $n_{min}$ fällt. Über der Rotationsgeschwindigkeit $n_{min}$ kann das andere Verfahren aktiv sein und unterhalb dieser Geschwindigkeit kann die erfindungsgemäße Bremsprozedur aktiv werden, und die anfängliche Orientierung des Rotormagnetflusses kann durch eine nächstliegende Orientierung von einem der sechs aktiven Spannungsvektoren angenähert werden.

In der zweiten Phase kann der anfängliche Bremszielspannungsvektor so gewählt werden, dass der Ansteuergrad sicherstellt, dass der durchschnittliche DC-Link-Strom im Gleichgewichtszustand nicht kleiner ist als der zum Betrieb notwendige Strom, und die Orientierung des anfänglichen Bremszielspannungsvektors die gleiche ist wie die ermittelte anfängliche Rotormagnetflussrichtung.

In der dritten Phase kann der momentan angelegte Bremszielspannungsvektor unverändert bleiben, bis eine Umschaltbedingung erfüllt ist, wenn die momentane Stromsteigung $\dot{i}_{mess}$ kleiner als ein Schwellwert $\dot{i}_{mess}^{SW}$ ist, der zwischen den Maximalwert $\dot{i}_{mess}^{Max}$ und dem Minimalwert $\dot{i}_{mess}^{Min}$ unter den gespeicherten Stromsteigungen ist, und ein neuer Bremszielspannungsvektor kann angelegt werden mit einer neuen Orientierung, die dem zuvor angelegten Bremszielspannungsvektor 60° voraus ist. Die Bremsprozedur kann abgeschlossen sein, wenn die abgelaufene Zeit nach einem Umschalten auf den momentanen Bremszielspannungsvektor eine vorgegebene Zeitdauer überschreitet.

Die hierin beschriebenen Aspekte der Erfindung, also das Verfahren zum Regeln eines Permanentmagnetsynchronmotors, die Steuervorrichtung und das Vakuumgerät lassen sich selbstverständlich und vorteilhaft im Sinne aller zu jeweils anderen Aspekten beschriebenen Ausführungsformen weiterbilden.

Die Erfindung wird nachfolgend lediglich beispielhaft anhand der schematischen Zeichnung erläutert. Es zeigen, jeweils schematisch:

Fig. 1A    eine Illustration einer Induktanz und eines Phasenstroms ohne Rotor;

Fig. 1B    eine Illustration einer Induktanz und eines Phasenstroms bei einer ersten Rotorstellung;

Fig. 1C    eine Illustration einer Induktanz und eines Phasenstroms bei einer zweiten Rotorstellung;

Fig. 2    eine Illustration des Grundprinzips der erfindungsgemäßen Ermittlung des Rotorwinkels für verschiedene Rotorstellungen;

Fig. 3    eine Brückenschaltung;

Fig. 4    eine Illustration von Spannungsvektoren;

Fig. 5        eine Illustration von Stromänderungen;

Fig. 6        eine Illustration von aktiven Spannungsvektoren;

Fig. 7        eine Illustration einer vektorpaar-basierten Spannungsmodulation gemäß einem Ausführungsbeispiel;

Fig. 8        ein System zum Messen der Stromsteigung gemäß einer Ausführungsform;

Fig. 9        eine Illustration eines Scanprozesses;

Fig. 10       eine Illustration einer möglichen Definition von Sektoren bezüglich des Rotorwinkels;

Fig. 11       eine Illustration eines Beispiels für die Wahl des anfänglichen Spannungsvektors;

Fig. 12       eine Illustration eines zeitlichen Ablaufs der Umschaltung der Spannungsvektoren;

Fig. 13       eine Illustration einer Orientierung des anfänglichen Spannungsvektors zu Beginn der Bremsprozedur gemäß einem Ausführungsbeispiel; und

Fig. 14       eine Illustration von verschiedenen Sequenzen von Spannungsvektoren zum Bremsen eines Motors.

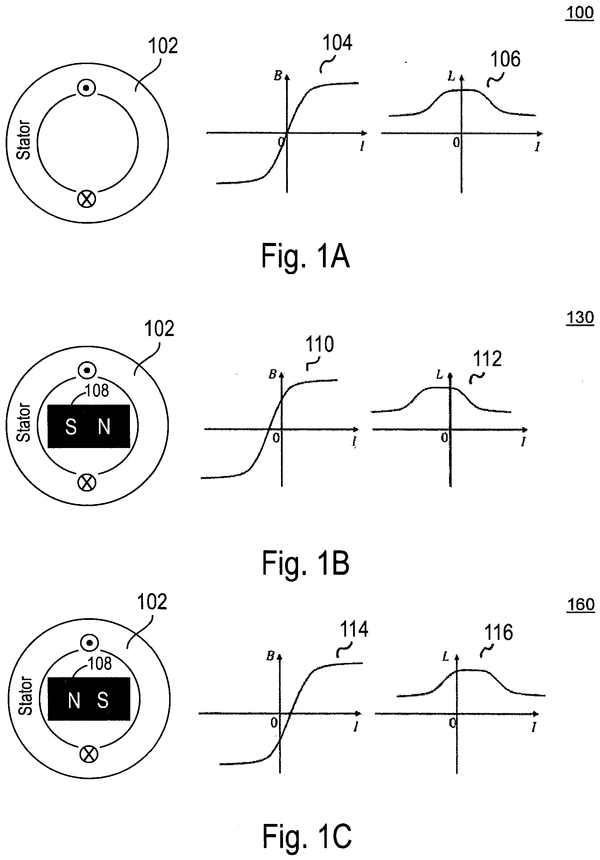

Fig. 1A, Fig. 1B und Fig. 1C zeigen Illustrationen 100, 130, 160 einer Abhängigkeit einer einphasigen Induktanz und eines Phasenstroms von einem Rotorwinkel. Fig. 1A zeigt die Situation ohne Rotor: der Stator 102 kommt symmetrisch in Sättigung in beiden Richtungen (in anderen Worten die Sättigung bei Strömen gleicher Größe aber entgegengesetzte Richtungen an gleicher Stelle vor, wie es aus der zum Ursprung punktsymmetrische Kurve 104, die die magnetische Flussdichte über dem Strom zeigt, ersichtlich ist), was eine symmetrische Induktanz-Strom-Kurve 106 zur Folge hat. Fig. 1B und Fig. 1C zeigen Situationen, in der ein Rotor 108 vorhanden ist, wobei der Rotor 108 komplett mit Magnetisierungsrichtung des Stators (in Fig. 1B) oder gegen die Magnetisierungsrichtung des Stators (in Fig. 1C) ausgerichtet ist. Bei gleichem Phasenstrom ist die Phasen Induktanz unterschiedlich, wenn die Rotororientierung unterschiedlich ist. Basierend auf diesem Prinzip kann der Rotorwinkel ermittelt werden.

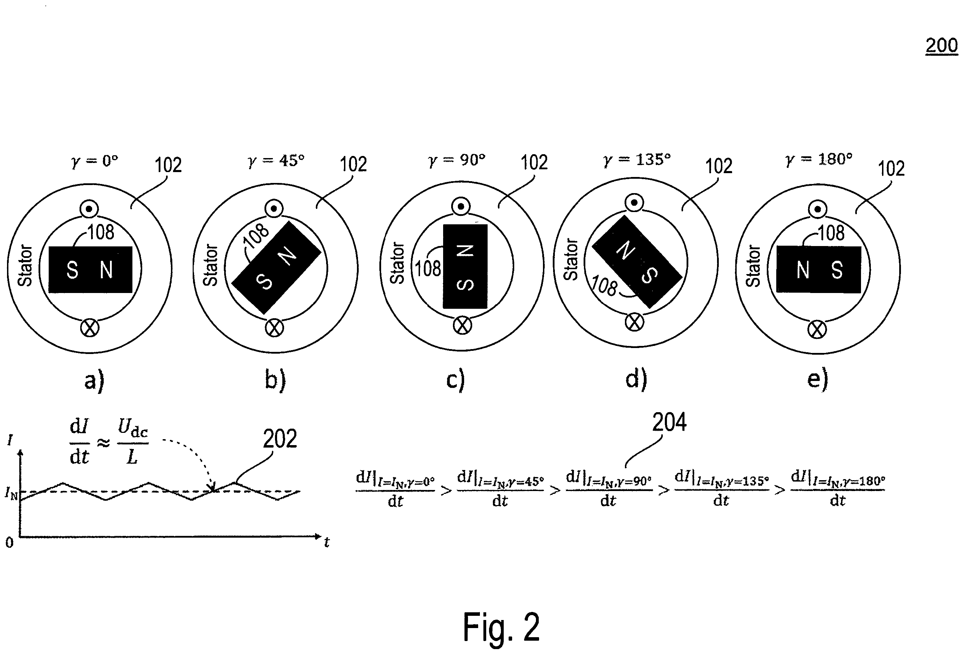

Fig. 2 zeigt eine Illustration 200 des Grundprinzips der erfindungsgemäßen Ermittlung des Rotorwinkels für verschiedene Rotorstellungen. Die Motorphasen werden normalerweise über pulsweitenmodulierte (PWM) Leistungsverstärker angetrieben. Darum enthalten die Phasenströme immer Schwankungen 202 aufgrund der Spannungsumschaltung. Die Stromänderungen dieser Schwankungen sind ein Maß für die Phaseninduktanz. Auswertung der Änderungen der Phasenströme können Informationen über die Orientierung des magnetischen Flusses des Rotors liefert, wie durch Formeln 204 dargestellt. Jedoch kann in diesem Beispiel nicht die komplette Information des Rotorwinkels ermittelt werden. Die Anwendung des Fluxgate Prinzips wird erfindungsgemäß auf mehrere Phasen, beispielsweise drei Phasen, eines PMSMs erweitert, wobei die Antriebsspannung für einen PMSM als Vektor aufgefasst werden kann.

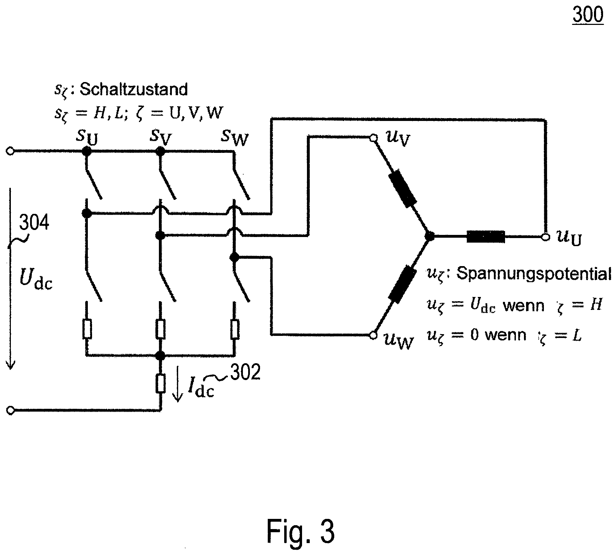

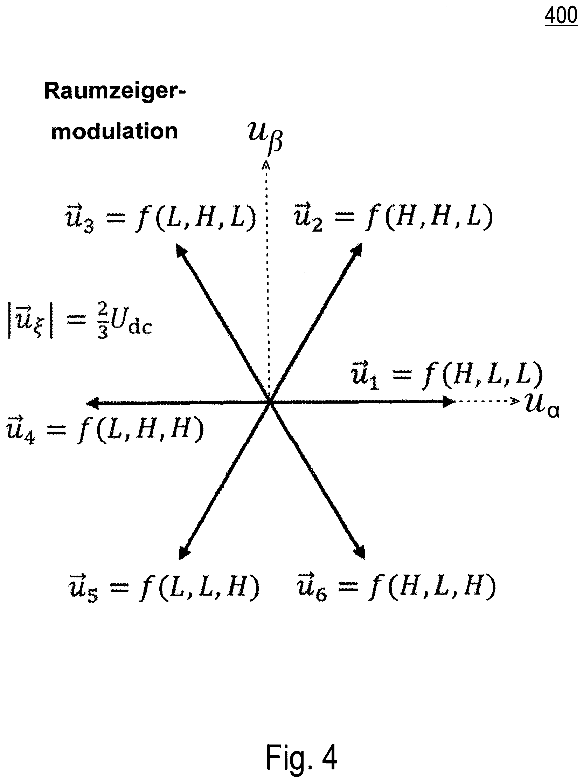

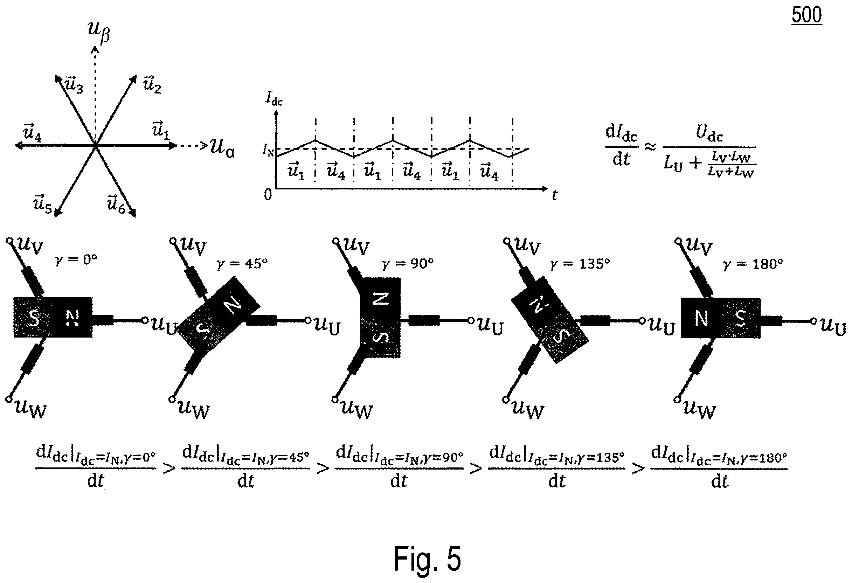

Ein PMSM wird gewöhnlich über eine sogenannte B6-Brückenschaltung 300, wie in Fig. 3 gezeigt, angesteuert. Abhängig von den verfügbaren Schaltzuständen gibt es sechs mögliche aktive Spannungsvektoren, wie in der Illustration 400 von Fig. 4 dargestellt. Bei beispielhafter Betrachtung des Beispiels aus Fig. 2, welches die Ansteuerung einer einzigen Phase U mit einer skalaren alternierenden Spannung darstellt, kann in einem 3-phasigen System der Motor abwechselnd mit Spannungsvektoren 1 und 4 angesteuert werden, und der DC-Link-Strom $I_{dc}$ 302 (entsprechend der Spannung $U_{dc}$ 304 wie in Fig. 3 gezeigt) ermittelt werden. Dieses Beispiel ist in der Illustration 500 von Fig. 5 dargestellt. Anschaulich wird also Spannungsvektor 1 verwendet, um die Spule in eine Richtung in Sättigung zu bringen, während der Spannungsvektor 4 verwendet wird, um die Spule in die andere Richtung in Sättigung zu bringen. Dabei ist es unerheblich, ob die Sättigung wirklich erreicht wird. Erfindungsgemäß ist der Anstieg des Stroms das Maß, basierend auf dem die Rotorstellung ermittelt wird. Der Ermittlung der Steigung des DC-Link-Stroms kann wie folgt zur Messung der Orientierung des magnetischen Flusses des Rotors verwendet werden. Der magnetische Fluss des Rotors ist komplett entlang der Richtung des Spannungsvektors 1 ausgerichtet, wenn die Steigung (in anderen Worten: Änderung) ihr Maximum erreicht, und der magnetische Fluss des Rotors ist komplett mit der Richtung des Spannungsvektors 4 erreicht, wenn die Steigung ihr Minimum erreicht.

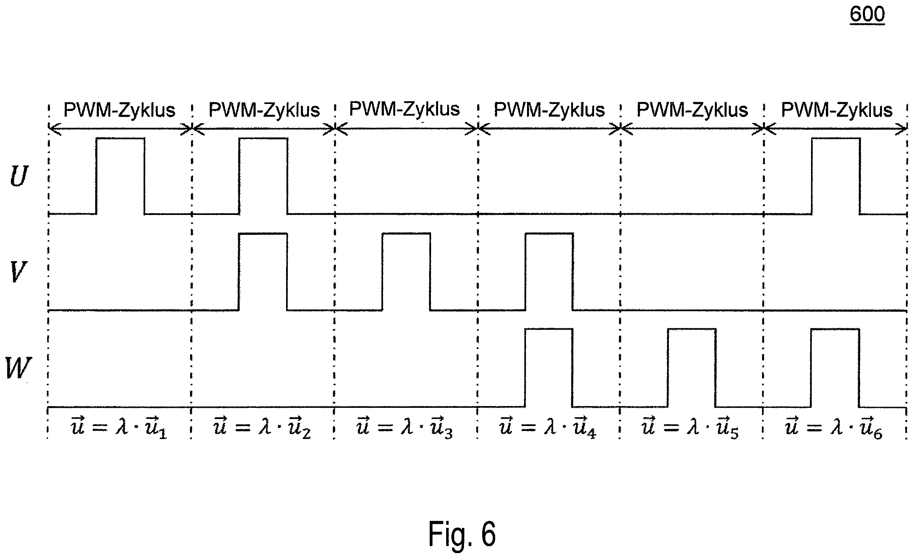

Fig. 6 zeigt eine Illustration 600 aller sechs aktiven Spannungsvektoren, die in einem 3-phasigen PMSM in einem kompletten PWM-Zyklus auftreten. Der PWM-Zyklus ist die kleinste Einheit der Spannungsmodulation, wobei der Ansteuergrad λ (der auch als Tastgrad bezeichnet werden kann; englisch: duty cycle) eingeführt wird, sodass für einen gegebenen PWM-Zyklus der äquivalente Spannungsvektor $\vec{u}$ durch eine von sechs Orientierungen mit der variablen Amplitude zwischen 0 und 100% (die durch den Ansteuergrad A definiert ist) repräsentiert werden kann.

Die sechs aktiven Spannungsvektoren können in drei Vektorpaare gruppiert werden, die die folgenden Bedingungen erfüllen:

$$\vec{u}_1 + \vec{u}_4 = 0 \qquad\qquad (2.1)$$

$$\vec{u}_2 + \vec{u}_5 = 0 \qquad\qquad (2.2)$$

$$\vec{u}_3 + \vec{u}_5 = 0 \qquad\qquad (2.3)$$

Betrachtet man nun zwei benachbarte PWM-Zyklen, in denen gemäß Ansteuerung des Motors eigentlich beispielsweise jeweils $\vec{u} = \lambda \cdot \vec{u}_1$ zur Steuerung des Motors an den Spulen anliegen soll, und wählt man im ersten PWM-Zyklus eine Spannung $a \cdot \vec{u}_1$ mit einem Ansteuergrad a, und im zweiten PWM-Zyklus eine Spannung $b \cdot \vec{u}_4$ mit einem Ansteuergrad b, dann kann eine äquivalente Spannung dieser beiden benachbarten PWM-Zyklen angegeben werden als der Mittelwert der tatsächlich angelegten Spannungen, also als

$$\vec{u} = \frac{a \cdot \vec{u}_1 + b \cdot \vec{u}_4}{2}. \qquad\qquad (2.4)$$

Gemäß Gleichung 2.1 ergibt sich der für die Ansteuerung eigentlich nötige Spannungsvektor $\vec{u} = \lambda \cdot \vec{u}_1$(der auch als Zielvektor bezeichnet werden kann) dann, wenn a und b folgende Gleichung erfüllen:

$$\lambda = \frac{a-b}{2} \qquad\qquad (2.5)$$

Mit den erfindungsgemäßen obigen Ausführungen kann ein gegebener Spannungsvektor mit einem Spannungspaar aus mindestens zwei paarweise verschiedenen aktiven Spannungsvektoren mit unterschiedlichen Ansteuergraden ersetzt oder approximiert werden. Während dabei der durchschnittliche resultierende Spannungsvektor für das Erhalten des durchschnittlichen Stroms, der durch die Motorwindungen fließt, verantwortlich ist, können erfindungsgemäß die abwechselnden Spannungsvektoren benutzt werden, um genügend Stromschwankungen für die Auswertung des Rotorflusswinkels zu liefern. Gemäß den obigen Ausführungen können alle nötigen Spannungsvektoren, die in Fig. 6 gezeigt sind, durch Vektorpaare ersetzt werden, wie sie in Tabelle 1 gezeigt sind.

Tabelle 1

| Zielvektor | Vektorpaar mit $\lambda = \frac{a-b}{2}$ | |
| --- | --- | --- |
| | Hauptvektor | Hilfsvektor |
| $\lambda \cdot \vec{u}_1$ | $a \cdot \vec{u}_1$ | $b \cdot \vec{u}_4$ |
| $\lambda \cdot \vec{u}_2$ | $a \cdot \vec{u}_2$ | $b \cdot \vec{u}_5$ |
| $\lambda \cdot \vec{u}_3$ | $a \cdot \vec{u}_3$ | $b \cdot \vec{u}_6$ |
| $\lambda \cdot \vec{u}_4$ | $a \cdot \vec{u}_4$ | $b \cdot \vec{u}_1$ |
| $\lambda \cdot \vec{u}_5$ | $a \cdot \vec{u}_5$ | $b \cdot \vec{u}_2$ |
| $\lambda \cdot \vec{u}_6$ | $a \cdot \vec{u}_6$ | $b \cdot \vec{u}_3$ |

Wie oben beschrieben kann es sechs verschiedene Zielvektoren zum Erreichen eines durchschnittlichen Windungsstroms des Motors geben. Jeder Zielvektor wird durch den Ansteuergrad $\lambda$, welcher die Amplitude des Spannungsvektors festlegt, und eine Vektornummer zwischen 1 und 6, welche die Orientierung des Spannungsvektors festlegt, repräsentiert. Jeder Zielvektor wird für mindestens zwei PWM-Zyklen angelegt. Die Dauer aller PWM-Zyklen zum Approximieren des Zielvektors ist kann als ein Messzyklus bezeichnet werden, innerhalb dessen mindestens ein PWM-Zyklus verwendet wird, um einen Hauptvektor mit einem Ansteuergrad a auszugeben, der die gleiche Orientierung hat wie der Zielvektor, und mindestens ein PWM Zyklus kann verwendet werden, um einen Hilfsvektor mit einem Ansteuergrad b auszugeben, dessen Orientierung entgegengesetzt der Orientierung des Zielvektors ist. Die Tastgrade a und b während eines Messzyklus sind wie oben beschrieben so gewählt, dass die durchschnittliche Spannung während des Messzyklus äquivalent ist zu dem vorgegebenen Zielvektor, der durch seinen Ansteuergrad $\lambda$ und seine Orientierung beschrieben wird.

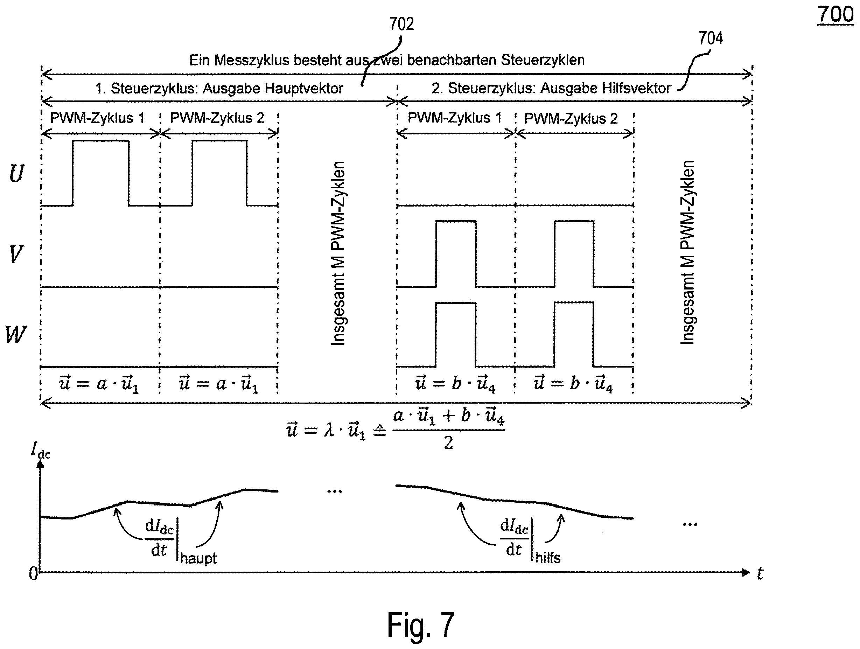

Fig. 7 zeigt eine Illustration 700 einer Implementierung der vektorpaar-basierten Spannungsmodulation gemäß einem Ausführungsbeispiel. Ein kompletter Messzyklus ist dargestellt, welcher aus 2 benachbarten Steuerzyklen 702 und 704 besteht. Jeder Steuerzyklus enthält mindestens einen PWM-Zyklus. Im in Fig. 7 dargestellten Beispiel enthalten beide Steuerzyklen die gleiche Anzahl M von PWM-Zyklen. Während der erste Steuerzyklus verwendet wird, um den Hauptvektor auszugeben (zum sie an den Spulen anzulegen), wird der andere Steuerzyklus verwendet, um den Hilfsvektor auszugeben. Wie in Fig. 7 dargestellt, können aus Gründen der einfacheren technischen Umsetzbarkeit innerhalb eines Steuerzyklus alle PWM-Zyklen den gleichen Spannungsvektor ausgeben, d. h. der Ansteuergrad und die Vektororientierung werden nur jeden Steuerzyklus geändert, nicht aber jeden PWM-Zyklus. Dabei ist die Beziehung zwischen dem Ansteuergrad $\lambda$ und den individuellen Ansteuergraden a und b der jeweiligen Steuerzyklen gemäß Gleichung (2.5) gewählt. Für jeden Messzyklus wird, mindestens während des Steuerzyklus für den Hauptvektor, die Steigung des DC-Link-Stroms für die Dauer das aktiven Schaltens gemessen. Das aktive Schalten ist definiert durch einen Zustand, wenn eine Phase der 3 Phasen einen Spannungspotenzial von $U_{dc}$ hat, und eine der restlichen 2 Phasen ein Spannungspotenzial von 0 (Null) hat und die letzte Phase ein Spannungspotenzial von entweder $U_{dc}$ oder 0 hat.

Die Stromänderung (oder die Stromsteigung), die während des aktiven Schaltens des ersten Steuerzyklus für den Hauptvektor gemessen wird, wird als $\left.\frac{dI_{dc}}{dt}\right|_{haupt}$ bezeichnet. Die Stromänderung (oder die Stromsteigung), die während des aktiven Schaltens des zweiten Steuerzyklus für den Hilfsvektor gemessen wird als $\left.\frac{dI_{dc}}{dt}\right|_{hilfs}$ bezeichnet. Die Hilfsvariable $\dot{i}_{mess}$ kann als Maß für die DC-Link-Stromsteigung eines Messzyklus eingeführt werden. Beispielsweise kann alleine $\left.\frac{dI_{dc}}{dt}\right|_{haupt}$ verwendet werden, in anderen Worten:

$$\dot{i}_{mess} = \left.\frac{dI_{dc}}{dt}\right|_{haupt} \tag{2.6}$$

Alternativ kann die DC-Link-Stromsteigung sowohl für den Hauptvektor als auch für den Hilfsvektor gemessen werden, und das Maß $\dot{i}_{mess}$ kann die Differenz von beiden sein:

$$\dot{i}_{mess} = \left.\frac{dI_{dc}}{dt}\right|_{haupt} - \left.\frac{dI_{dc}}{dt}\right|_{hilfs} \tag{2.6}$$

Für die beiden Fälle von Gleichungen 2.6 und 2.7, ist $\dot{i}_{mess}$ ein direktes Maß für den Rotorflusswinkel bezüglich der Orientierung des Hauptvektors dieses Messzyklus. $\dot{i}_{mess}$ wird maximal, wenn der Rotor entlang dem Hauptvektor ausgerichtet ist, und wird minimal, wenn der Rotor mit dem Hilfsvektor ausgerichtet ist, also entgegen der Richtung des Hauptvektors. Gleichung 2.7 ist der Gleichung 2.6 vorzuziehen, wenn der Rotor sich bereits dreht, und die induzierte Spannung (back EMF) dadurch die Genauigkeit von $\dot{i}_{mess}$ beeinflusst. Da die Back-EMF einen identischen oder ähnlichen Einfluss auf $\left.\frac{dI_{dc}}{dt}\right|_{haupt}$ und $\left.\frac{dI_{dc}}{dt}\right|_{hilfs}$ hat, kann die Differenzbildung gemäß Gleichung 2.7 den Einfluss der induzierten Spannung reduzieren oder minimieren.

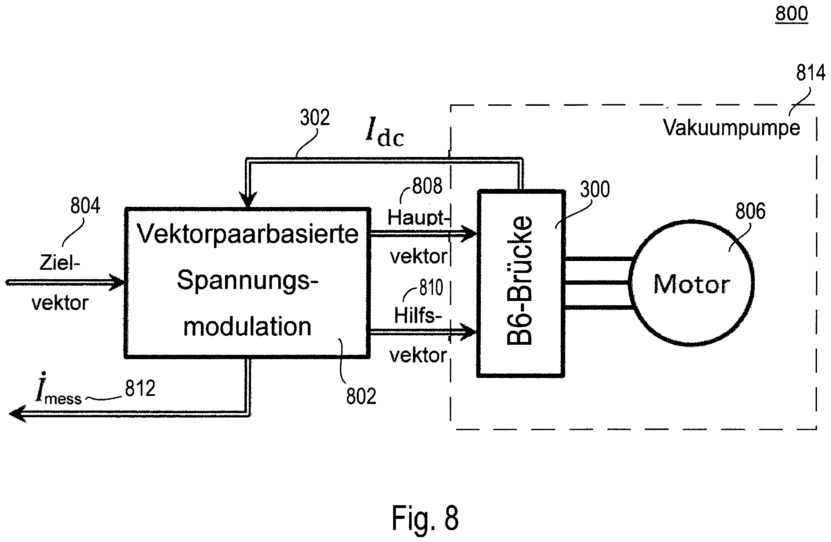

Fig. 8 zeigt ein System 800 zum Messen der Stromsteigung gemäß einer Ausführungsform. Das erfindungsgemäße Modulationsmodul 802 empfängt den Zielvektor 804 als eine Eingabe einer höheren Steuervorrichtung, und betreibt den Motor 806 abwechselnd mit einem Spannungspaar bestehend aus dem Hauptvektor 808 und dem Hilfsvektor 810, wodurch eine Messung von $\dot{i}_{mess}$ 812 (und damit des Rotorflusswinkels) ermöglicht wird, und der Messwert $\dot{i}_{mess}$ 812 kann an die höher gelegene Steuervorrichtung weitergegeben werden. Die höher gelegene Steuervorrichtung ist verantwortlich für das Aufrechterhalten des durchschnittlichen Motorwindungsstroms durch Erzeugen eines geeigneten Zielspannungsvektors, und sie wertet auch $\dot{i}_{mess}$ aus, um den tatsächlichen Rotorflusswinkel zu ermitteln, wie es im Folgenden beschrieben wird. In einer Ausführungsform können der Motor 806 und die B6-Brücke 300 in einer Vakuumpumpe 814, beispielsweise einer Turbomolekularpumpe, angeordnet sein. Während das Modulationsmodul 802 in Fig.

8 als außerhalb der Vakuumpumpe 814 angeordnet dargestellt ist, kann in einer alternativen Ausführungsform auch das Modulationsmodul 802 in der Vakuumpumpe 814 angeordnet sein.

Erfindungsgemäß kann ein gesteuertes Anlaufen des Motors bereitgestellt werden. "Gesteuert" bedeutet in diesem Zusammenhang, dass der Motor gemäß dem tatsächlich variierenden Rotorwinkel angefahren wird, ähnlich wie in feldorientierter Steuerung. Dies benötigt eine konstante Überwachung des Rotorflusswinkels sowie eine geeignete Änderung des Zielspannungsvektors.

In einer ersten Phase der Anlaufprozedur werden Stromsteigungen ermittelt. Gemäß Tab. 1 gibt es sechs mögliche Orientierungen um einen kompletten Kreis, wie in Fig. 4 gezeigt, aufzubauen. Für einen gegebenen Zielvektor $\lambda \cdot \vec{u}_\xi$ liefert die Ausgabe $\dot{I}_{mess}$ des Modulationsmoduls 802 Informationen über die Rotorflussausrichtung verglichen mit der Orientierung $\xi$ des Zielvektors. Ein maximaler Wert von $\dot{I}_{mess}$ bedeutet einen Winkel von 0° zwischen dem magnetischen Fluss des Rotors und der Orientierung $\xi$ und ein minimaler Wert bedeutet einen Winkel von 180°. Während sich der Rotor von der komplett ausgerichteten Orientierung bezüglich des Zielvektors in die entgegengesetzte Richtung dreht, nimmt der Wert von $\dot{I}_{mess}$ monoton von seinem Maximum auf sein Minimum ab. Erfindungsgemäß werden die Extremwerte (also das Maximum und das Minimum) von $\dot{I}_{mess}$ ermittelt.

Eine Möglichkeit ist es, einen gegebenen Zielvektor für eine definierte Zeit anzulegen und $\dot{I}_{mess}$ konstant zu messen, während der Rotor über einen externen Antrieb gedreht wird. Die Extremwerte von $\dot{I}_{mess}$ lassen sich dann aus den aufgenommenen Messwerten ermitteln. Dies ist jedoch praktisch nicht immer möglich, insbesondere dann, wenn keine Möglichkeit besteht, den Motor mittels eines externen Antriebs zu drehen. Ferner haben Produktionsschwankungen einen starken Einfluss, so dass diese Identifikation für jeden Motor individuell durchgeführt werden müsste, was nicht praktikabel sein kann.

Erfindungsgemäß kann die individuelle Identifikation erfolgen basierend auf der Tatsache, dass ein Festlegen des Spannungsvektors und Rotieren des Rotors äquivalent ist zum Festlegen des Rotors und Rotieren des Spannungsvektors, da in beiden Fällen der Wert von $\dot{I}_{mess}$ seinen Maximalwert und seinen Minimalwert annimmt. Erfindungsgemäß wird daher ein Scanprozess als eine erste Stufe der Anlaufprozedur für die Identifikation der Extremwerte ausgeführt. Der Scanprozess enthält mindestens sechs Segmente, sodass jede der sechs möglichen Orientierungen in Fig. 4 mindestens einmal identifiziert wird. Innerhalb eines Segments des Scanprozesses werden mehrere Messzyklen angewendet. Dies ist nötig aufgrund der Zeitkonstante der Motorwindungen, so dass die Motorwindungen eine Startzeit benötigen, um den mittleren Strom, der durch Anlegen des entsprechenden Zielspannungsvektors $\vec{u}_\xi$ erwartet wird, zu erreichen. Am Ende jedes Segments wird angenommen, dass der Zielstrom erreicht ist, und die entsprechende Stromsteigung $\dot{I}_{mess}$ wird aufgenommen und zusammen mit seiner Orientierung $\xi$ gespeichert. Nach dem Scannen aller Orientierungen wird eine Nachschlagetabelle mit sechs Komponenten angelegt, wobei jede der Komponenten einer Orientierung und der entsprechenden Stromsteigung $\dot{I}_{mess}$ entspricht.

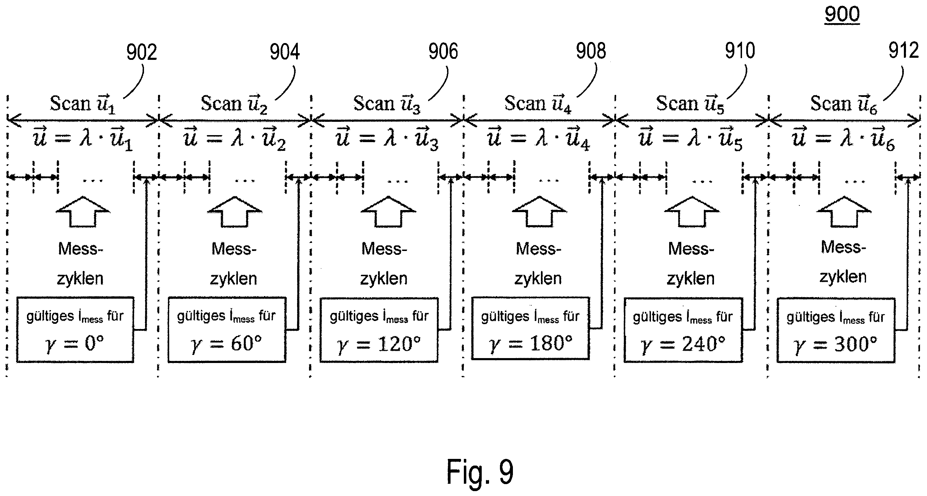

Fig. 9 zeigt eine Illustration 900 des oben beschriebenen Scanprozesses. Die sechs Segmente 902, 904, 906, 908, 910, 912 für unterschiedliche Orientierungen sind die Minimalanforderungen und die Reihenfolge der angewendeten Orientierungen kann beliebig gewählt werden, vorausgesetzt, dass jede der sechs Orientierungen mindestens einmal identifiziert wird.

In einer zweiten Phase der Anlaufprozedur wird die anfängliche Rotorflussposition ermittelt.

Gemäß der Nachschlagetabelle aus dem Scanprozess kann der anfängliche Winkel des Rotors ermittelt werden. Während es möglich ist, den präzisen Rotorwinkel aus den sechs Stromsteigungen unter Verwendung der Clark-Transformation zu erhalten, kann es ausreichend sein, den Motor nur mit der Information darüber, in welchem Sektor sich der Rotor gerade befindet, zu betreiben.

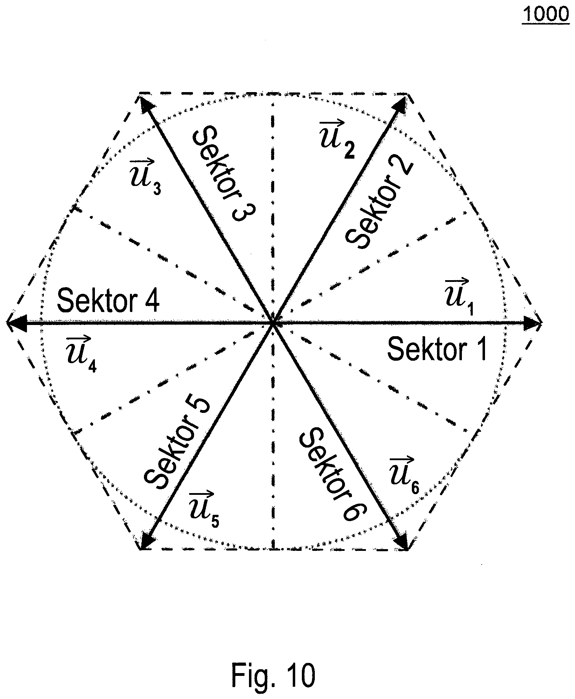

Fig. 10 zeigt eine Illustration 1000 einer möglichen Definition von Sektoren bezüglich des Rotorwinkels. Die Definition der Sektoren ist so gewählt, dass die Sektornummer der aktiven Spannungsvektornummer entspricht. Dann kann die Nachschlagetabelle beispielsweise wie in Tabelle 2 dargestellt sein. Die Sektoren sind in Fig. 10 durch gestrichelte Linien getrennt dargestellt.

Tabelle 2

| Sektornummer | 1 | 2 | 3 | 4 | 5 | 6 |
|---|---|---|---|---|---|---|
| Strom steigung | $\dot{I}_{mess}[1]$ | $\dot{I}_{mess}[2]$ | $\dot{I}_{mess}[3]$ | $\dot{I}_{mess}[4]$ | $\dot{I}_{mess}[5]$ | $\dot{I}_{mess}[6]$ |

Der Sektor, in dem sich der Rotorfluss befindet, erfährt die maximale Stromsteigung. Daher kann durch das Finden des Maximums unter den Stromsteigungen in Tabelle 2 die anfängliche Orientierung des Rotormagnetflusses zum Beginn der Anlaufprozedur identifiziert werden.

In einer dritten Phase der Anlaufprozedur wird der anfängliche Spannungsvektor ausgegeben.

Um den Rotor zu beschleunigen, wird ein anfänglicher Zielvektor angelegt. Das ist die erste Aktion der kontrollierten Anlaufprozedur. Die Wahl des anfänglichen Zielvektors $\lambda \cdot \vec{u}_\xi$ erfolgt basierend auf zwei Überlegungen: 1) Der Ansteuergrad $\lambda$ sollte einen ausreichend großen Stromfluss durch die Motorwindungen in einem stabilen Zustand sicherstellen, so dass die Motorwindungen in Sättigung kommen können. Ein typischer Wert von $\lambda$ ist so gewählt, dass ein bestimmter Phasenstrom durch die Windungen fließt. 2) Die Vektororientierung $\xi$ ist der Rotationsrichtung bezüglich des aktuellen Sektors, in der sich der Rotor befindet, um zwei Sektoren voraus. Dadurch kann selbst bei gleichem identifizierten anfänglichen Sektor des Rotorflusses der anfängliche Antriebsspannungsvektor in verschiedenen Sektoren liegen, je nach gewünschter Drehrichtung der Beschleunigung.

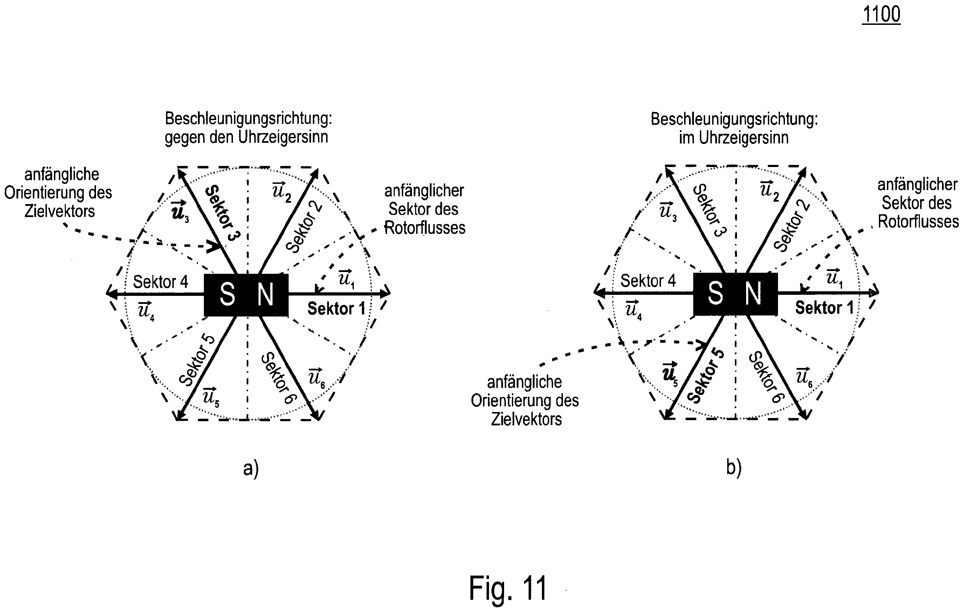

Fig. 11 zeigt eine Illustration 1100 eines Beispiels für die Wahl des anfänglichen Spannungsvektors. Für beide Fälle ist der anfängliche Rotorfluss mit $\vec{u}_1$ ausgerichtet und liegt in Sektor 1. Um den Rotor gegen den Uhrzeigersinn zu beschleunigen, muss der Zielspannungsvektor $\lambda \cdot \vec{u}_3$ für ein positives Drehmoment angelegt werden, wie in Teil a) von Fig. 11 gezeigt. Wenn eine Beschleunigung im Uhrzeigersinn benötigt wird, muss der Vektor $\lambda \cdot \vec{u}_5$ für ein negatives Drehmoment angewendet werden, wie in Teil b) von Fig. 11 gezeigt.

In einer vierten Phase der Anlaufprozedur wird ein kontrolliertes Anlaufen durchgeführt.

Nachdem der anfängliche Zielspannungsvektor $\lambda \cdot \vec{u}_{\xi_0}$ angelegt wird, beginnt der Rotor, sich in Richtung (also hin zu) $\lambda \cdot \vec{u}_{\xi_0}$ zu drehen. Spätestens zu dem Zeitpunkt, an dem der Rotorfluss vollständig mit $\lambda \cdot \vec{u}_{\xi_0}$ ausgerichtet ist, muss der nächste Zielspannungsvektor in Richtung der gewünschten Drehrichtung angelegt werden, sonst würde der Rotor gebremst. Um die Beschleunigung aufrecht zu erhalten, ist es wichtig, eine geeignete Zeit zum Umschalten auf den nächsten Spannungsvektor zu finden.

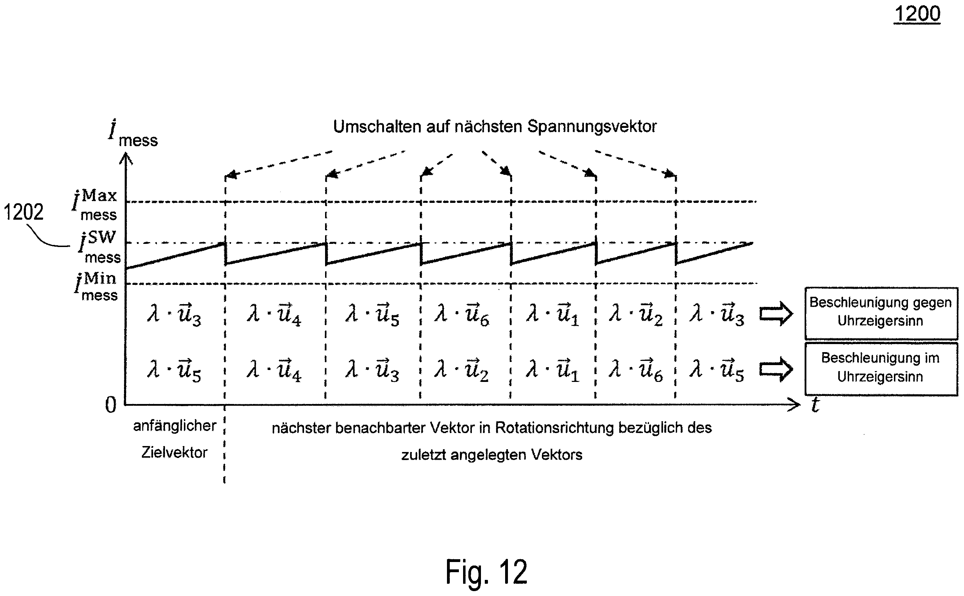

Unter Verwendung der erfindungsgemäßen vektorpaarbasierten Spannungsmodulation ist die entsprechende Stromsteigung $\dot{i}_{mess}$, die ein Maß für die Ausrichtung des Rotormagnetflusses bezüglich des momentanen Spannungsvektors $\vec{u}_\xi$ ist, immer verfügbar während ein vorgegebener Zielspannungsvektor $\lambda \cdot \vec{u}_\xi$ angelegt wird. Diese Information kann verwendet werden, um einen geeigneten Zeitpunkt zum Umschalten des Spannungsvektors zu ermitteln. Ganz am Anfang nach dem Anlegen des anfänglichen Spannungsvektors $\lambda \cdot \vec{u}_{\xi_0}$, wenn die Rotorflussorientierung fast entgegengesetzt der angelegten Spannung ist, wie beispielsweise in Fig. 11 dargestellt, muss die entsprechende Stromsteigung $\dot{i}_{mess}$ deutlich unterhalb ihres Maximalwertes $\dot{i}_{mess}^{Max}$ liegen. Während sich der Rotor hin zu $\lambda \cdot \vec{u}_\xi$ dreht, nimmt die Stromsteigung $\dot{i}_{mess}$ zu. Dadurch kann die Beschleunigung des Rotors aufrecht erhalten werden, wenn ein Schwellwert $\dot{i}_{mess}^{SW}$ zwischen dem minimalen Wert $\dot{i}_{mess}^{Min}$ der Stromsteigung und dem maximalen Wert $\dot{i}_{mess}^{Max}$ der Stromsteigung gewählt wird, und der jeweils nächste Spannungsvektor in der gewünschten Bewegungsrichtung angelegt wird, sobald die momentane Stromsteigung $\dot{i}_{mess}$ größer wird als der Schwellwert $\dot{i}_{mess}^{SW}$. Dies ist in Fig. 12 dargestellt.

Fig. 12 zeigt eine Illustration 1200 eines zeitlichen Ablaufs der Umschaltung der Spannungsvektoren während eines kontrollierten Anlaufens gemäß einer Ausführungsform.

In dem in Fig. 12 dargestellten Beispiel sind die möglichen Reihenfolgen von angelegten Spannungsvektoren gemäß dem in Fig. 11 gezeigten anfänglichen Spannungsvektor angegeben. Die Wahl des Schwellwerts $\dot{i}_{mess}^{SW}$ 1202 kann beliebig sein, aber ein einfach zu ermittelnder und angemessener Wert kann der Mittelwert der sechs gescannten Werte, die in Tabelle 2 angegeben sind, sein.

Währen des kontrollierten Anlaufs kann die abgelaufene Zeit für jeden Zielvektor messbar sein. Nachdem das Umschalten immer in Schritten von 60° erfolgt, kann die Rotationsgeschwindigkeit berechnet werden. Die Geschwindigkeitsinformation kann verwendet werden, um die Anlaufprozedur zu beenden und in einen normalen Betrieb basierend auf einem sensorlosen Back-EMF-Betrieb umgeschaltet werden, wenn der Bereich mit niedriger Rotationsgeschwindigkeit fertig durchlaufen ist.

Ähnlich dem kontrollierten Anlaufen kann ein normaler Back-EMF-basierter FOC einen PMSM auch nicht kontrolliert elektrisch bremsen, also durch einen Bereich mit niedriger Drehzahl zum Stillstand bringen. Im Falle von Antriebssystemen mit hohen Trägheiten und geringer Reibung kann die Zeit bis zum Stillstand zu lange sein, um noch akzeptabel zu sein.

Erfindungsgemäß kann ein Verfahren ähnlich dem oben beschriebenen Verfahren zum kontrollierten Anlaufen des Motors auch verwendet werden, um den Motor ohne zusätzliche mechanische Bremsvorrichtungen zu bremsen.

Der Beginn des kontrollierten Bremsens ist gleichzeitig das Ende eines Zeitraums, in dem ein Back-EMF-Verfahren eingesetzt werden kann, so dass der Rotorwinkel und die Rotorgeschwindigkeit verfügbar sind. Nachdem der Motor in einem sensorlosen FOC war, wurde zuvor die Anlaufprozedur erfolgreich durchgeführt, sodass eine Nachschlagetabelle für die Stromsteigungen, wie beispielsweise in Tab. 2 gezeigt, verfügbar ist. Mit diesem Wissen sind die ersten beiden Phasen wie oben beschrieben nicht notwendig für ein kontrolliertes Bremsen. Es existieren jedoch Unterschiede in der Bestimmung des anfänglichen Spannungsvektors, der angelegt werden soll, und der Strategie des Vektorumschaltens.

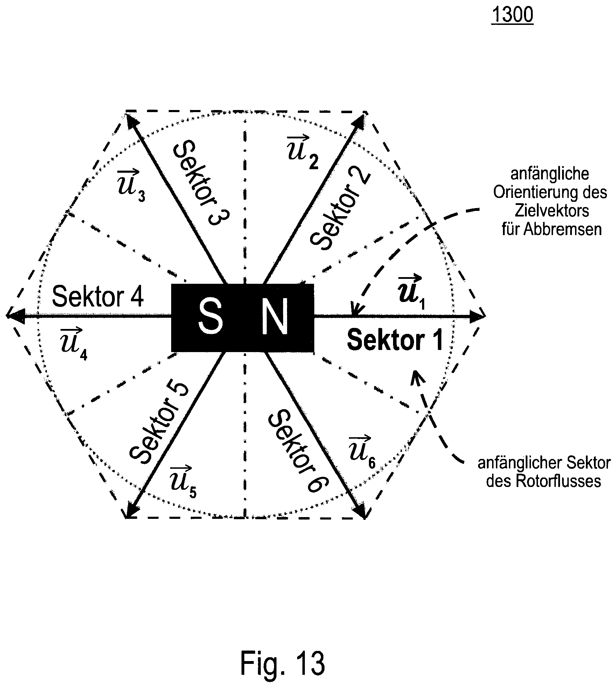

Verglichen mit der Prozedur des Anlaufens ist die Wahl des anfänglichen Spannungsvektor einfacher: es kann der Spannungsvektor des Sektors, in dem sich der Rotor momentan befindet, verwendet werden, ohne die Berücksichtigung der gewünschten Beschleunigungsrichtung. Ein Beispiel ist in Fig. 13 gezeigt.

Fig. 13 zeigt eine Illustration 1300 einer Orientierung des anfänglichen Spannungsvektors zu Beginn der Bremsprozedur gemäß einem Ausführungsbeispiel.

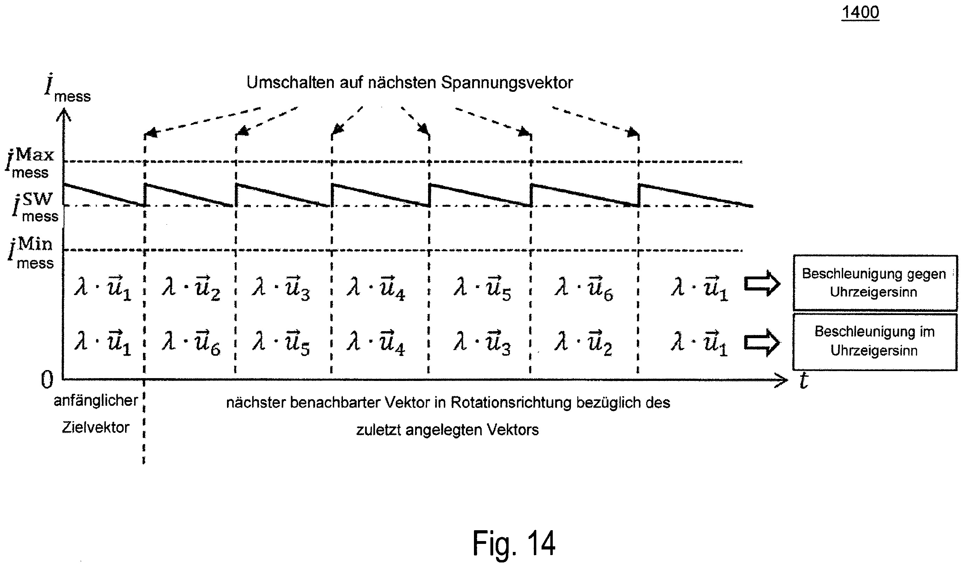

Der nächste Schritt ist das Umschalten des Spannungsvektors, um ein Abbremsen beizubehalten. Der größte Unterschied verglichen mit der Prozedur des Anlaufens ist die andere Richtung der Stromsteigung $\dot{i}_{mess}$. Durch die Ausrichtung des Rotorflusses mit dem anfänglich angelegten Spannungsvektor ist die anfängliche Stromsteigung nahe dem Maximalwert $\dot{i}_{mess}^{Max}$ und nimmt während des Abbremsens ab hin zu $\dot{i}_{mess}^{Min}$. Dadurch soll ein Umschalten des Spannungsvektors stattfinden, wenn die momentane Stromsteigung $\dot{i}_{mess}$ unter einen vorgegebenen Schwellwert zwischen $\dot{i}_{mess}^{Min}$ und $\dot{i}_{mess}^{Max}$ fällt. Beispielsweise kann der gleiche Schwellwert $\dot{i}_{mess}^{SW}$ wie für das Anlaufen verwendet werden. Diese Strategie ist in Fig. 14 illustriert.

Fig. 14 zeigt eine Illustration 1400 von verschiedenen Sequenzen von Spannungsvektoren zum Bremsen eines Motors mit Rotation im Gegenuhrzeigersinn, sowie im Uhrzeigersinn, für das Beispiel der anfänglichen Rotororientierung wie in Fig. 13 gezeigt.

Während des kontrollierten Bremsens kann die vergangene Zeit für jeden angelegten Zielvektor gemessen werden, ähnlich wie beim Verfahren zum kontrollierten Anlaufen. Wenn ein Vektor umschalten nicht innerhalb von einer Sekunde stattfindet, liegt die mechanische Rotation unterhalb von 10 Umdrehungen pro Minute. Dies kann als Bedingung zum Beenden der Prozedur des kontrollierten Bremsens verwendet werden.

**Bezugszeichenliste**

| | |
|---|---|
| 100 | Illustration einer Abhängigkeit einer Induktanz und eines Phasenstroms von einem Rotorwinkel |
| 102 | Stator |
| 104 | Kurve einer Flussdichte |
| 106 | Kurve einer Induktanz |
| 108 | Rotor |
| 110 | Kurve einer Flussdichte |
| 112 | Kurve einer Induktanz |
| 114 | Kurve einer Flussdichte |
| 116 | Kurve einer Induktanz |
| 130 | Illustration einer Abhängigkeit einer Induktanz und eines Phasenstroms von einem Rotorwinkel |
| 160 | Illustration einer Abhängigkeit einer Induktanz und eines Phasenstroms von einem Rotorwinkel |
| 200 | Illustration des Grundprinzips der erfindungsgemäßen Ermittlung des Rotorwinkels für verschiedene Rotorstellungen |
| 202 | Schwankungen |
| 204 | Formeln |
| 300 | Brückenschaltung |
| 302 | $I_{dc}$ |
| 304 | $U_{dc}$ |
| 400 | Illustration von Spannungsvektoren |
| 500 | Illustration von Stromänderungen |
| 600 | Illustration von aktiven Spannungsvektoren |
| 700 | Illustration einer vektorpaar-basierten Spannungsmodulation gemäß einem Ausführungsbeispiel |
| 702 | Steuerzyklus für Ausgabe des Hauptvektors |
| 704 | Steuerzyklus für Ausgabe des Hilfsvektors |
| 800 | System zum Messen der Stromsteigung gemäß einer Ausführungsform |
| 802 | Modulationsmodul |
| 804 | Zielvektor |
| 806 | Motor |
| 808 | Hauptvektor |
| 810 | Hilfsvektor |

| 812 | Stromsteigung |
| 900 | Illustration eines Scanprozesses |
| 902 | Segment eines Scanprozesses für $\gamma=0°$ |
| 904 | Segment eines Scanprozesses für $\gamma=60°$ |
| 906 | Segment eines Scanprozesses für $\gamma=120°$ |
| 908 | Segment eines Scanprozesses für $\gamma=180°$ |
| 910 | Segment eines Scanprozesses für $\gamma=240°$ |
| 912 | Segment eines Scanprozesses für $\gamma=300°$ |
| 1000 | Illustration einer möglichen Definition von Sektoren bezüglich des Rotorwinkels |
| 1100 | Illustration eines Beispiels für die Wahl des anfänglichen Spannungsvektors |
| 1200 | Illustration eines zeitlichen Ablaufs der Umschaltung der Spannungsvektoren |
| 1202 | $i_{mess}^{SW}$ |
| 1300 | Illustration einer Orientierung des anfänglichen Spannungsvektors zu Beginn der Bremsprozedur gemäß einem Ausführungsbeispiel |
| 1400 | Illustration von verschiedenen Sequenzen von Spannungsvektoren zum Bremsen eines Motors |

**Patentansprüche**

1. Verfahren zum Regeln eines Permanentmagnetsynchronmotors (806), welcher bevorzugt in einem Vakuumgerät (1502) eingebaut ist, insbesondere während eines Anlaufens oder Abbremsens des Permanentmagnetsynchronmotors (806), wobei der Permanentmagnetsynchronmotor (806) einen Permanentmagnetrotor (108) und eine Mehrzahl von, bevorzugt um eine Rotationsachse des Permanentmagnetrotors (108) angeordnete, Spulen umfasst, die mit einem, sich bevorzugt um die Rotationsachse drehenden, Spannungsvektor ansteuerbar sind, **dadurch gekennzeichnet, dass** das Verfahren zumindest folgende Schritte umfasst:

Ermitteln eines, zum Erreichen einer gewünschten Bewegung des Permanentmagnetrotors (108), nötigen Zielspannungsvektors und eines Zielansteuergrads;
Ermitteln eines ersten Zeitraums zum Ansteuern der Spulen mit einem ersten Spannungsvektor (808) und eines zweiten Zeitraums zum Ansteuern der Spulen mit einem zweiten Spannungsvektor (810), so, dass eine aus der Ansteuerung der Spulen während des ersten Zeitraums und des zweiten Zeitraums resultierende Ansteuerung der Spulen äquivalent ist zu einer Ansteuerung der Spulen mit dem Zielspannungsvektor und dem Zielansteuergrad;
Ansteuern der Spulen mit dem ersten Spannungsvektor (808) für den ersten Zeitraum;
vor oder nach dem ersten Zeitraum, Ansteuern der Spulen mit dem zweiten Spannungsvektor (810) für den zweiten Zeitraum;
Ermitteln einer Stromsteigung basierend auf einer Stromänderung in den Spulen während des ersten Zeitraums und/oder während des zweiten Zeitraums; und
Regeln des Permanentmagnetsynchronmotors (806) basierend auf der ermittelten Stromsteigung.

2. Verfahren nach Anspruch 1,
wobei der erste Spannungsvektor (808) gleichgerichtet ist zum Zielspannungsvektor, und wobei der zweite Spannungsvektor (810) gegengleichgerichtet ist zum Zielspannungsvektor.

3. Verfahren nach Anspruch 1 oder 2,
wobei der erste Zeitraum a und der zweite Zeitraum b bei vorgegebenem Zielansteuergrad $\lambda$ zumindest im Wesentlichen folgende Bedingung erfüllen:

$$\lambda = \frac{a - b}{2}.$$

4. Verfahren nach einem der vorstehenden Ansprüche,
wobei das Regeln des Permanentmagnetsynchronmotors (806) ein Ermitteln einer Lage des Permanentmagnetrotors (108) umfasst.

5. Verfahren nach einem der vorstehenden Ansprüche, ferner umfassend:

Ermittlung von Extremwerten der Stromsteigung bei verschiedenen Ansteuerungen der Spulen.

**6.** Verfahren nach Anspruch 5, ferner umfassend:
Ermitteln, ob auf einen nächsten Zielspannungsvektor in einer gewünschten Bewegungsrichtung umgeschaltet werden soll basierend auf mindestens einem der Extremwerte.

**7.** Verfahren nach Anspruch 6,
wobei beim Anlaufen des Permanentmagnetsynchronmotors (806) ermittelt wird, dass auf einen nächsten Zielspannungsvektor in einer gewünschten Bewegungsrichtung umgeschaltet werden soll, falls die Stromsteigung einen vorgegebenen Maximalwert überschreitet.

**8.** Verfahren nach einem der Ansprüche 6 oder 7,
wobei beim Abbremsen des Permanentmagnetsynchronmotors (806) ermittelt wird, dass auf einen nächsten Zielspannungsvektor in einer gewünschten Bewegungsrichtung umgeschaltet werden soll, falls die Stromsteigung einen vorgegebenen Minimalwert unterschreitet.

**9.** Verfahren nach einem der vorstehenden Ansprüche,
wobei die Stromsteigung basierend auf einer Stromänderung in den Spulen nur während des ersten Zeitraums oder nur während des zweiten Zeitraums ermittelt wird.

**10.** Verfahren nach einem der Ansprüche 1 bis 8,
wobei die Stromsteigung basierend auf einer Stromänderung in den Spulen während des ersten Zeitraums und während des zweiten Zeitraums ermittelt wird, insbesondere über eine Differenzbildung zwischen den Stromänderungen in den Spulen während des ersten Zeitraums und während des zweiten Zeitraums.

**11.** Verfahren nach einem der vorstehenden Ansprüche, ferner umfassend:
Ermitteln einer Rotationsgeschwindigkeit des Permanentmagnetrotors (108) basierend auf der Stromsteigung.

**12.** Verfahren nach Anspruch 11, ferner umfassend:
Ermitteln, ob zu einem Regelungsverfahren, das nicht auf der ermittelten Stromsteigung basiert, umgeschaltet wird.

**13.** Steuervorrichtung, insbesondere eines Vakuumgeräts, eingerichtet zum Ausführen des Verfahrens gemäß einem der vorstehenden Ansprüche.

**14.** Steuervorrichtung nach Anspruch 13, ferner umfassend:
eine übergeordnete Steuereinheit, die zum Bereitstellen von zum Erreichen einer gewünschten Bewegung des Permanentmagnetrotors (108) nötigen Zielspannungsvektor und Zielansteuergrad eingerichtet ist.

**15.** Vakuumgerät, insbesondere Vakuumpumpe, die die Steuervorrichtung gemäß einem der Ansprüche 13 oder 14 und den Permanentmagnetsynchronmotor (806) umfasst.

**Claims**

**1.** A method of regulating a permanent magnet synchronous motor (806), which is preferably installed in a vacuum device (1502), in particular during a starting up or braking of the permanent magnet synchronous motor (806), wherein the permanent magnet synchronous motor (806) comprises a permanent magnet rotor (108) and a plurality of coils which are preferably arranged about an axis of rotation of the permanent magnet rotor (108) and which can be controlled with a voltage vector which preferably rotates about the axis of rotation, **characterized in that** the method at least comprises the following steps:

determining a target voltage vector, which is necessary for achieving a desired movement of the permanent magnet rotor (108), and a target degree of control;
determining a first time period for controlling the coils with a first voltage vector (808) and a second time period for controlling the coils with a second voltage vector (810) such that a control of the coils resulting from the control of the coils during the first time period and the second time period is equivalent to a control of the coils with the target voltage vector and the target degree of control;
controlling the coils with the first voltage vector (808) for the first time period;

controlling the coils with the second voltage vector (810) for the second time period before or after the first time period;

determining a current slope based on a current change in the coils during the first time period and/or during the second time period; and

regulating the permanent magnet synchronous motor (806) based on the determined current slope.

2. A method in accordance with claim 1,
   wherein the first voltage vector (808) is directed the same as the target voltage vector, and wherein the second voltage vector (810) is directed opposite to the target voltage vector.

3. A method in accordance with claim 1 or claim 2,
   wherein the first time period a and the second time period b at least substantially satisfy the following condition when the target degree of control $\lambda$ is predefined:

$$\lambda = \frac{a - b}{2}.$$

4. A method in accordance with any one of the preceding claims,
   wherein the regulation of the permanent magnet synchronous motor (806) comprises determining a position of the permanent magnet rotor (108).

5. A method in accordance with at least one of the preceding claims, further comprising:
   determining extreme values of the current slope in the case of different controls of the coils.

6. A method in accordance with claim 5, further comprising:
   determining whether a switchover to a next target voltage vector in a desired direction of movement is to take place based on at least one of the extreme values.

7. A method in accordance with claim 6,
   wherein, on the starting up of the permanent magnet synchronous motor (806), a determination is made that a switchover to a next target voltage vector in a desired direction of movement is to take place if the current slope exceeds a predefined maximum value.

8. A method in accordance with one of the claims 6 or 7,
   wherein, on the braking of the permanent magnet synchronous motor (806), a determination is made that a switchover to a next target voltage vector in a desired direction of movement is to take place if the current slope falls below a predefined minimum value.

9. A method in accordance with any one of the preceding claims,
   wherein the current slope is determined based on a current change in the coils only during the first time period or only during the second time period.

10. A method in accordance with any one of the claims 1 to 8,
    wherein the current slope is determined based on a current change in the coils during the first time period and during the second time period, in particular via a difference formation between the current changes in the coils during the first time period and during the second time period.

11. A method in accordance with at least one of the preceding claims, further comprising:
    determining a rotational speed of the permanent magnet rotor (108) based on the current slope.

12. A method in accordance with claim 11, further comprising:
    determining whether a switchover to a regulation method that is not based on the determined current slope is taking place.

13. A control apparatus, in particular a vacuum device, configured to perform the method in accordance with any one of the preceding claims.

**14.** A control apparatus in accordance with claim 13, further comprising:
a higher-ranking control unit that is configured to provide a target voltage vector and a target degree of control that are necessary for achieving a desired movement of the permanent magnet rotor (108).

**15.** A vacuum device, in particular a vacuum pump, that comprises the control apparatus in accordance with one of the claims 13 or 14 and the permanent magnet synchronous motor (806).

**Revendications**

**1.** Procédé de régulation d'un moteur synchrone à aimants permanents (806), intégré de préférence dans un appareil à vide (1502), en particulier pendant le démarrage ou la décélération du moteur synchrone à aimants permanents (806), le moteur synchrone à aimants permanents (806) comprenant un rotor à aimants permanents (108) et une pluralité de bobines disposées de préférence autour d'un axe de rotation du rotor à aimants permanents (108) et pouvant être pilotées avec un vecteur de tension tournant de préférence autour de l'axe de rotation,
**caractérisé en ce que**
le procédé comprend au moins les étapes suivantes consistant à :

déterminer un vecteur de tension cible et un degré de pilotage cible, nécessaires pour obtenir un mouvement souhaité du rotor à aimants permanents (108) ;
déterminer une première période de temps pour piloter les bobines avec un premier vecteur de tension (808), et une seconde période de temps pour piloter les bobines avec un second vecteur de tension (810), de telle sorte qu'un pilotage des bobines résultant du pilotage des bobines pendant la première période de temps et la seconde période de temps est équivalent à un pilotage des bobines avec le vecteur de tension cible et avec le degré de pilotage cible ;
piloter les bobines avec le premier vecteur de tension (808) pendant la première période de temps ;
avant ou après la première période de temps, piloter les bobines avec le second vecteur de tension (810) pendant la seconde période de temps ;
déterminer une pente de courant sur la base d'une variation de courant dans les bobines pendant la première période de temps et/ou pendant la seconde période de temps ; et
réguler le moteur synchrone à aimants permanents (806) sur la base de la pente de courant déterminée.

**2.** Procédé de la revendication 1,
dans lequel le premier vecteur de tension (808) est orienté dans le même sens que le vecteur de tension cible, et le second vecteur de tension (810) est orienté dans le sens diamétralement opposé à celui du vecteur de tension cible.

**3.** Procédé selon la revendication 1 ou 2,
dans lequel, à un degré de pilotage cible donné $\lambda$, la première période de temps a et la seconde période de temps b satisfont au moins sensiblement à la condition suivante :

$$\lambda = \frac{a-b}{2}$$

**4.** Procédé selon l'une des revendications précédentes,
dans lequel la régulation du moteur synchrone à aimants permanents (806) comprend la détermination d'une position du rotor à aimants permanents (108).

**5.** Procédé selon l'une des revendications précédentes, consistant en outre à :
déterminer des valeurs extrêmes de la pente de courant à différents pilotages des bobines.

**6.** Procédé selon la revendication 5, consistant en outre à :

déterminer s'il faut commuter à un vecteur de tension cible suivant, dans une direction de mouvement souhaitée, sur la base de l'une au moins des valeurs extrêmes.

**7.** Procédé selon la revendication 6,
dans lequel, lors du démarrage du moteur synchrone à aimants permanents (806), il est déterminé qu'il faut commuter à un vecteur de tension cible suivant, dans une direction de mouvement souhaitée, si la pente de courant dépasse une valeur maximale prédéterminée.

8. Procédé selon l'une des revendications 6 ou 7,
dans lequel, lors de la décélération du moteur synchrone à aimants permanents (806), il est déterminé qu'il faut commuter à un vecteur de tension cible suivant, dans une direction de mouvement souhaitée, si la pente de courant tombe en dessous d'une valeur minimale prédéterminée.

9. Procédé selon l'une des revendications précédentes,
dans lequel la pente de courant est déterminée sur la base d'une variation de courant dans les bobines uniquement pendant la première période de temps ou uniquement pendant la seconde période de temps.

10. Procédé selon l'une des revendications 1 à 8,
dans lequel la pente de courant est déterminée sur la base d'une variation de courant dans les bobines pendant la première période de temps et pendant la seconde période de temps, en particulier par formation d'une différence entre les variations de courant dans les bobines pendant la première période de temps et pendant la seconde période de temps.

11. Procédé selon l'une des revendications précédentes, consistant en outre à :
déterminer une vitesse de rotation du rotor à aimants permanents (108) sur la base de la pente de courant.

12. Procédé selon la revendication 11, consistant en outre à :
déterminer s'il faut commuter à un procédé de régulation non basé sur la pente de courant déterminée.

13. Dispositif de commande, en particulier d'un appareil à vide, adapté pour mettre en œuvre le procédé selon l'une des revendications précédentes.

14. Dispositif de commande selon la revendication 13, comprenant en outre :
une unité de commande de niveau supérieur conçue pour fournir un vecteur de tension cible et un degré de pilotage cible nécessaires pour obtenir un mouvement souhaité du rotor à aimants permanents (108).

15. Appareil à vide, en particulier une pompe à vide, comprenant le dispositif de commande selon l'une des revendications 13 ou 14 et le moteur synchrone à aimants permanents (806).

Fig. 1A

Fig. 1B

Fig. 1C

Fig. 2

<u>300</u>

$s_\zeta$: Schaltzustand

$s_\zeta = H, L; \ \zeta = U, V, W$

$s_U \qquad s_V \qquad s_W$

304

$U_{dc}$

$I_{dc}$ ~302

$u_V$

$u_U$

$u_\zeta$: Spannungspotential

$u_\zeta = U_{dc}$ wenn $\zeta = H$

$u_W \quad u_\zeta = 0$ wenn $\zeta = L$

Fig. 3

<u>400</u>

**Raumzeiger-**

**modulation**

$u_\beta$

$\vec{u}_3 = f(L, H, L)$   $\vec{u}_2 = f(H, H, L)$

$\left| \vec{u}_\xi \right| = \frac{2}{3} U_{dc}$

$\vec{u}_1 = f(H, L, L)$

$u_\alpha$

$\vec{u}_4 = f(L, H, H)$

$\vec{u}_5 = f(L, L, H)$   $\vec{u}_6 = f(H, L, H)$

Fig. 4

20

500

$$\frac{\mathrm{d}I_{dc}}{\mathrm{d}t} \approx \frac{U_{dc}}{L_U + \frac{L_V \cdot L_W}{L_V + L_W}}$$

Fig. 5

Fig. 6

Fig. 7

Fig. 8

EP 3 651 347 B1

EP 3 651 347 B1

900

| 902 | 904 | 906 | 908 | 910 | 912 |
|---|---|---|---|---|---|
| Scan $\vec{u}_1$ | Scan $\vec{u}_2$ | Scan $\vec{u}_3$ | Scan $\vec{u}_4$ | Scan $\vec{u}_5$ | Scan $\vec{u}_6$ |
| $\vec{u} = \lambda \cdot \vec{u}_1$ | $\vec{u} = \lambda \cdot \vec{u}_2$ | $\vec{u} = \lambda \cdot \vec{u}_3$ | $\vec{u} = \lambda \cdot \vec{u}_4$ | $\vec{u} = \lambda \cdot \vec{u}_5$ | $\vec{u} = \lambda \cdot \vec{u}_6$ |

Mess-zyklen

Mess-zyklen

Mess-zyklen

Mess-zyklen

Mess-zyklen

Mess-zyklen

| gültiges $i_{mess}$ für $\gamma = 0°$ | gültiges $i_{mess}$ für $\gamma = 60°$ | gültiges $i_{mess}$ für $\gamma = 120°$ | gültiges $i_{mess}$ für $\gamma = 180°$ | gültiges $i_{mess}$ für $\gamma = 240°$ | gültiges $i_{mess}$ für $\gamma = 300°$ |

Fig. 9

Fig. 10

Fig. 11

Fig. 12

1300

Fig. 13

Fig. 14

EP 3 651 347 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10162380 A1
- DE 102007028384 A1
- EP 3582387 A1